# FASCICULE DE BREVET EUROPEEN

(11) **EP 0 751 335 B1**
(45) Date de publication et mention de la délivrance du brevet: **29.11.2000**
(21) Numéro de dépôt: 96401315.5
(22) Date de dépôt: 18.06.1996
(51) Int. Cl.: F16L 37/26

(54) **Raccord étanche à emmanchement radial**
Dichte Verbindung mit radialem Einsteckende
Sealed joint with radial plug-in end

(30) Priorité: 30.06.1995 FR 9507902
(43) Date de publication de la demande: 02.01.1997
(73) Titulaire: Etablissements CAILLAU, 92130 Issy-les-Moulineaux (FR)
(72) Inventeur: Andre, Michel, 41200 Romorantin (FR); Detable, Pascal, 41130 Gievres (FR)
(74) Mandataire: Hasenrader, Hubert

(56) Documents cités:
- EP-A- 0 247 534
- DE-C- 748 940
- DE-U- 1 828 907
- FR-A- 421 561
- FR-A- 1 350 361
- US-A- 1 866 905
- US-A- 2 092 243

## Description

La présente invention concerne un raccord étanche comprenant un premier et un deuxième embouts tubulaires ayant, chacun, une extrémité munie d'un orifice.

Le premier embout présente, au-delà de son extrémité, une extension axiale munie d'une gorge transversale en forme de U, comprenant une portion semi-circulaire de rayon supérieur au rayon de l'orifice du premier embout et deux portions rectilignes situées de part et d'autre de ladite portion semi-circulaire. Cette gorge présente une première paroi radiale, située du côté de l'extrémité du premier embout, et une deuxième paroi radiale opposée à la première.

Le deuxième embout est muni d'un bourrelet, sensiblement circulaire, radialement saillant et présentant une face radiale opposée à l'extrémité de ce deuxième embout. Ce bourrelet est apte à être engagé dans la gorge au cours d'un déplacement transversal relatif des deux embouts pour raccorder lesdits embouts. L'extrémité de l'un des embouts est pourvue d'un joint circulaire d'étanchéité, faisant axialement saillie au-delà de cette extrémité et susceptible d'entrer en contact étanche avec l'extrémité de l'autre embout.

Le brevet français publié sous le numéro 1 350 361 divulgue un raccord étanche de ce type, qui présente l'avantage de ne pas nécessiter d'emmanchement axial, puisque l'emmanchement est réalisé à la suite d'un déplacement transversal relatif des deux embouts. Ceci permet de mettre en place le raccord même lorsque le débattement axial est très faible, ce qui est notamment le cas dans certaines applications de l'industrie automobile pour lesquelles le raccord doit être mis en place in situ sous le capot d'un véhicule, où le volume disponible est très faible. L'un au moins des deux embouts peut recevoir, préalablement à son raccordement étanche sur l'autre embout, un tube souple qui est emmanché à force et éventuellement serré sur cet embout par un collier.

Le raccord de l'art antérieur présente toutefois un inconvénient dans la mesure où, le joint circulaire d'étanchéité faisant axialement saillie au-delà de l'extrémité de l'embout sur lequel il est monté, ce joint frotte sur l'extrémité de l'autre embout tout au long du déplacement d'emmanchement. Il en résulte des risques importants d'usure prématurée et de fluage, de sorte que l'étanchéité n'est pas toujours durablement assurée.

La présente invention a pour but de remédier à cet inconvénient et de proposer un raccord pour lequel le frottement du joint soit évité, ou tout au moins limité, au cours du déplacement relatif des deux embouts visant à les raccorder l'un à l'autre et pour lequel le raccordement étanche soit assuré en position de raccordement des embouts.

Ce but est atteint grâce au fait que le deuxième embout présente une collerette radiale, élastiquement flexible axialement et présentant une face radiale opposée à l'extrémité de ce deuxième embout, cette face radiale étant susceptible de prendre appui sur la deuxième paroi de la gorge lorsque le bourrelet est engagé dans cette gorge, et au fait que l'une des deux pièces constituées par le premier et le deuxième embout présente un prolongement axial situé au voisinage de son orifice, tandis que l'autre de ces deux pièces présente, au voisinage du bord de son orifice, un renfoncement axial adapté à loger ce prolongement en position de raccordement des embouts.

Grâce à ces dispositions, l'extrémité libre du prolongement axial coopère, au cours d'une partie au moins de la course d'engagement du bourrelet dans la gorge, avec la face frontale de l'extrémité de l'autre pièce (celle qui ne comporte pas le prolongement). Le joint est ainsi préservé des frottements excessifs lors de la course d'engagement. A cette occasion, la collerette radiale est sollicitée élastiquement dans le sens de l'éloignement relatif des extrémités des deux embouts.

A la fin de la course d'engagement, le prolongement vient se loger dans le renfoncement axial sous l'effet de l'élasticité de la collerette dont la face radiale prend appui sur la deuxième paroi de la gorge. A cette occasion, la collerette élastique sollicite également le joint en contact étanche avec l'extrémité de l'embout qui lui fait face.

Avantageusement, le renfoncement axial présente une forme complémentaire de celle du prolongement.

L'invention sera bien comprise et ses avantages apparaîtront mieux à la lecture de la description détaillée qui suit, d'un mode de réalisation indiqué à titre d'exemple non limitatif.

La description se réfère aux dessins annexés sur lesquels :
- la figure 1 est une vue partielle en coupe axiale du raccord selon l'invention, en position de raccordement des deux embouts,
- la figure 2 est une vue en coupe dans un plan indiqué par la ligne II-II de la figure 1, montrant les deux embouts au cours de la course d'engagement,
- la figure 3 est une vue en coupe selon la ligne III-III de la figure 2,
- la figure 4 est une vue partielle en coupe axiale montrant un détail de l'extrémité de l'un des embouts, et
- la figure 5 est une vue partielle en coupe axiale, montrant une variante de réalisation du joint d'étanchéité, sur laquelle les deux embouts sont en position de raccordement.

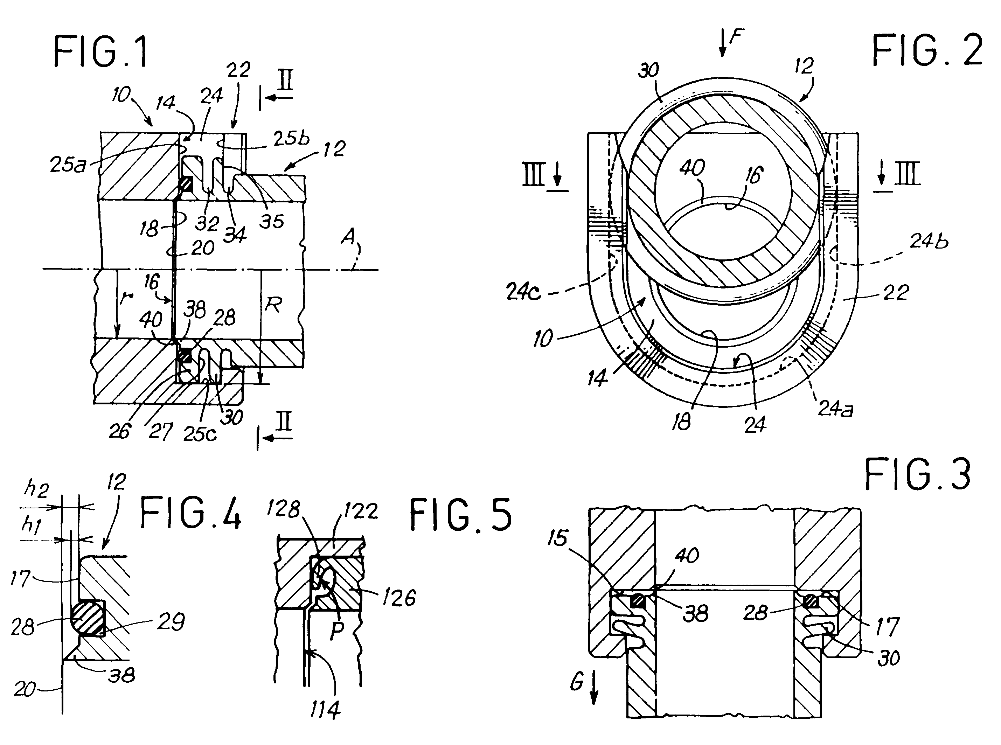

Les figures 1 à 3 montrent un raccord étanche comprenant un premier embout tubulaire 10 et un deuxième embout tubulaire 12. Pour simplifier, on n'a représenté que les portions d'extrémités de ces embouts. Il doit être entendu qu'ils peuvent être raccordés à des tubes par tout moyen connu ou constituer l'extrémité de ces tubes. Ces embouts ont, chacun, une extrémité 14, 16, munie d'un orifice 18, 20.

Le premier embout 10, présente au-delà de son extrémité 14, une extension axiale 22 munie d'une gorge transversale 24 en forme de U. Plus précisément, la gorge 24 comprend une portion semi-circulaire 24a de rayon R supérieur au rayon r de l'orifice 18 du premier embout, et deux portions rectilignes 24b et 24c, situées de part et d'autre de la portion semi-circulaire 24a. La gorge 24 présente également une première paroi radiale 25a située du côté de l'extrémité 14 du premier embout et une deuxième paroi radiale 25b opposée à la première et lui faisant face.

Bien entendu, lorsqu'ils occupent leur position de raccordement, les deux embouts sont coaxiaux, d'axe A. L'orifice 20 du deuxième embout 12 présente le même rayon r que l'orifice 18 du premier.

Le deuxième embout 12 est muni d'un bourrelet 26 sensiblement circulaire, radialement saillant et présentant une face radiale 27 opposée à l'extrémité 16 de ce deuxième embout. Dans l'exemple représenté, le rayon extérieur du bourrelet 26 est sensiblement égal au rayon R de la portion semi-circulaire 24a de la gorge, de sorte qu'en position de raccordement, le bourrelet 26 coopère avec le fond 25c de cette gorge 24. Le bourrelet est donc apte à être engagé dans la gorge 24 au cours d'un déplacement transversal relatif des deux embouts, au cours duquel le deuxième embout se déplace par rapport au premier dans le sens de la flèche F de la figure 2.

L'extrémité 16 du deuxième embout 12 est pourvue d'un joint circulaire d'étanchéité 28 qui, comme on le voit mieux sur la figure 4, fait axialement saillie au-delà de cette extrémité. Ce joint est susceptible d'entrer en contact étanche avec l'extrémité du premier embout 10 et, plus précisément, avec la face frontale 15 de cette extrémité, en position de raccordement des embouts. De manière alternative, un joint analogue pourrait être monté à l'extrémité 14 du premier embout 10, et entrer, en position de raccordement, en contact étanche avec l'extrémité 16 du deuxième embout et, plus précisément, avec sa face frontale 17.

Une collerette radiale 30 équipe le deuxième embout 12, et est placée, par rapport à l'extrémité 16 de cet embout, en arrière du bourrelet 26. Cette collerette 30 est flexible dans la direction axiale. Pour ce faire, des gorges annulaires 32 et 34 sont ménagées, sur la périphérie externe du deuxième embout, de part et d'autre de la collerette 30.

Les deux embouts peuvent être réalisés dans des matériaux relativement rigides, par exemple du caoutchouc de haute densité. La flexibilité axiale de la collerette lui est alors conférée à la fois par sa faible épaisseur axiale comparativement à sa hauteur radiale et par la présence des gorges 32 et 34.

Cette collerette présente une face radiale 35 opposée à l'extrémité 16 du deuxième embout 12. Comme on le voit sur la figure 1, cette face radiale 35 est susceptible de prendre appui sur la deuxième paroi radiale 25b de la gorge 24 lorsque le bourrelet 26 est engagé dans cette gorge. En fait, c'est l'ensemble constitué par le bourrelet 26 et la collerette 30 qui est engagé dans la gorge.

Le deuxième embout 12 présente un prolongement axial 38 situé au voisinage du bord de son orifice 16, tandis que le premier embout 10, présente au voisinage du bord de son orifice 14, un renfoncement axial 40 adapté à recevoir ce prolongement axial 38 en position de raccordement des embouts, comme le montre la figure 1.

Dans l'exemple représenté, le prolongement axial 38 et le renfoncement axial 40 sont tronconiques, de formes complémentaires, le prolongement axial allant en se rétrécissant, dans le sens allant selon l'axe A, du premier vers le deuxième embout. Cette complémentarité de forme permet, en position de raccordement, de réaliser un calage relatif des embouts 10 et 12. Elle n'est toutefois pas indispensable, l'essentiel étant que le prolongement 38 puisse s'engager dans le renfoncement 40 sans gêner l'appui d'étanchéité du joint 28. Par ailleurs, on pourrait prévoir de réaliser le prolongement axial au voisinage du bord de l'orifice du premier embout et de doter le bord de l'orifice du deuxième embout du renfoncement axial.

Le fait de prévoir le prolongement et le renfoncement axiaux permet d'éviter le frottement du joint lors de la course d'engagement du deuxième embout par rapport au premier. En effet, comme le montre la figure 3, l'extrémité du prolongement 38 coopère avec la face frontale 15 de l'extrémité 14 du premier embout 10 au cours de la course d'engagement, tant que le deuxième embout n'est pas parvenu dans sa position d'engagement définitif. Ceci tend à repousser le deuxième embout par rapport au premier dans le sens de la flèche G de la figure 3, ce qui écarte d'autant le joint 28 de la face frontale de l'extrémité 14 du premier embout. Dans le même temps, la collerette 30 est sollicitée élastiquement dans le sens opposé à la flèche G, c'est-à-dire dans le sens allant vers l'extrémité du premier embout.

A la fin de la course d'engagement, le deuxième embout parvient dans sa position de raccordement par rapport au premier, dans laquelle le prolongement axial 38 est engagé dans le renfoncement axial 40. Alors, la collerette radiale 30 reprend sa position radiale naturelle sous l'effet de son élasticité et tend ainsi à contraindre le joint 28 en contact étanche avec la face frontale de l'extrémité du premier embout.

De préférence, pour éviter tout contact entre le joint et la face frontale 40 lorsque le prolongement 38 coopère avec cette dernière, la longueur axiale h2 de ce prolongement 38 est supérieure à la cote h1 du dépassement axial du joint 28 au-delà de l'extrémité 16 du premier embout.

Comme on l'a indiqué précédemment, le joint 28 et le prolongement 38 peuvent ne pas être prévus sur le même embout. Dans ce cas, on évite tout contact du joint avec la face frontale qui lui fait face lors de la course d'engagement en prévoyant, de manière générale, que la longueur axiale du prolongement axial soit supérieure à la cote de dépassement axial du joint au-delà de l'extrémité de l'embout qui en est pourvu.

La figure 5, sur laquelle les références des éléments communs à ceux de la figure 1 sont affectés des mêmes références augmentées de 100, montre une variante de réalisation du joint. En effet, dans les figures précédentes, le joint d'étanchéité est constitué par un joint torique, inséré dans une gorge annulaire 29 (figure 4) de l'extrémité de l'un des embouts. On peut également prévoir, comme le montre la figure 5, que le joint 128 soit constitué par une lèvre annulaire élastique solidaire de la périphérie du bourrelet 126, et s'étendant axialement au-delà de l'extrémité 116 du deuxième embout. Cette lèvre 128 est dirigée vers l'axe des embouts, de sorte que, lorsqu'un fluide sous pression circule dans le raccord, la pression tend à solliciter la lèvre 128 radialement vers l'extérieur, dans le sens de la flèche p, ce qui tend à augmenter encore l'étanchéité.

## Revendications

1. Raccord étanche comprenant un premier (10) et un deuxième (12,) embouts tubulaires ayant, chacun, une extrémité (14) munie d'un orifice (18, 20), le premier embout (10) présentant, au-delà de son extrémité, une extension axiale (22) munie d'une gorge transversale (24) en forme de U, comprenant une portion semi-circulaire (24a) de rayon (R) supérieur au rayon (r) de l'orifice (18) du premier embout et deux portions rectilignes (24b, 24c) situées de part et d'autre de ladite portion semi-circulaire (24a) , cette gorge présentant une première paroi radiale (25a), située du côté de l'extrémité (14) du premier embout, et une deuxième paroi radiale (25b) opposée à la première, le deuxième embout (12) étant muni d'un bourrelet (26), sensiblement circulaire, radialement saillant et présentant une face radiale (27) opposée à l'extrémité de ce deuxième embout, ce bourrelet étant apte à être engagé dans la gorge (24) au cours d'un déplacement transversal relatif (F) des deux embouts pour raccorder lesdits embouts, l'extrémité (16) de l'un des embouts (12) étant pourvue d'un joint circulaire d'étanchéité (28), faisant axialement saillie au-delà de cette extrémité et susceptible d'entrer en contact étanche avec l'extrémité de l'autre embout, caractérisé en ce que le deuxième embout (12) présente une collerette radiale (30), élastiquement flexible axialement et présentant une face radiale (35) opposée à l'extrémité (16) de ce deuxième embout (12), ladite face radiale étant susceptible de prendre appui sur la deuxième paroi radiale (25b) de la gorge (24) lorsque le bourrelet (26) est engagé dans cette gorge, et en ce que l'une (12) des deux pièces (10, 12) constituées par le premier et le deuxième embout présente un prolongement axial (38) situé au voisinage du bord de son orifice (16), cependant que l'autre (10) desdites pièces présente, au voisinage du bord de son orifice (14), un renfoncement axial (40) adapté à recevoir ledit prolongement axial (38) en position de raccordement des embouts (10, 12).

2. Raccord selon la revendication 1, caractérisé en ce que le prolongement et le renfoncement axiaux (38, 40) sont tronconiques, de formes complémentaires.

3. Raccord selon l'une des revendications 1 et 2, caractérisé en ce que la longueur axiale (h2) du prolongement axial (38) est supérieure à la cote (h1) du dépassement axial du joint d'étanchéité (28) au-delà de l'extrémité (16) de l'embout (12) pourvue de ce joint.

## Patentansprüche

1. Dichte Verbindung mit einem ersten (10) und einem zweiten (12) röhrenförmigen Ansatzstück, die je ein mit einer Öffnung (18, 20) versehenes Ende (14) haben, wobei das erste Ansatzstück (10) jenseits seines Endes eine axiale Verlängerung (22) mit einer U-förmigen Quernut (24) aufweist, die ein halbkreisförmiges Teilstück (24a) mit einem Radius (R) größer als der Radius (r) der Öffnung (18) des ersten Ansatzstücks sowie zwei beiderseits des genannten halbkreisförmigen Teilstücks (24a) angeordnete geradlinige Teilstücke (24b, 24c) umfaßt, wobei diese Nut eine erste radiale Wand (25a) auf der Seite des Endes (14) des ersten Ansatzstücks und eine der ersten gegenüberliegende zweite radiale Wand (25b) besitzt, wobei das zweite Ansatzstück (12) mit einem im wesentlichen kreisförmigen Wulst (26) ausgestattet ist, der radial vorspringt und eine dem Ende dieses zweiten Ansatzstücks gegenüberliegende radiale Fläche (27) aufweist, wobei dieser Wulst bei einer relativen Querverschiebung (F) der beiden Ansatzstücke in die Nut (24) eingreifen kann, um die genannten Ansatzstücke zu verbinden, wobei das Ende (16) des einen Ansatzstücks (12) mit einem Dichtungsring (28) versehen ist, der axial über dieses Ende vorspringt und sich abdichtend an das Ende des anderen Ansatzstücks anlegen kann,
dadurch gekennzeichnet, daß das zweite Ansatzstück (12) einen radialen Flansch (30) aufweist, der axial elastisch dehnbar ist und eine dem Ende (16) dieses zweiten Ansatzstücks (12) gegenüberliegende radiale Fläche (35) aufweist, wobei die genannte radiale Fläche sich auf der zweiten radialen Wand (25b) der Nut (24) abstützen kann, wenn der Wulst (26) in diese Nut eingreift, und daß eins (12) der beiden von dem ersten und zweiten Ansatzstück gebildeten Teile (10, 12) eine axiale Verlängerung (38) nahe dem Rand seiner Öffnung (16) aufweist, während das andere (10) der genannten Teile nahe dem Rand seiner Öffnung (14) einen axialen Rücksprung (40) aufweist, der geeignet ist, die axiale Verlängerung (38) in Verbindungsstellung der Ansatzstücke (10, 12) aufzunehmen.

2. Verbindung nach Anspruch 1,
dadurch gekennzeichnet, daß die axiale Verlängerung (38) und der axiale Rücksprung (40) zueinander komplementär kegelstumpfartig ausgebildet sind.

3. Verbindung nach einem der Ansprüche 1 oder 2,
dadurch gekennzeichnet, daß die axiale Länge (h2) der axialen Verlängerung (38) größer ist als das Maß (h1) des axialen Überstands der Dichtung (28) über das mit dieser Dichtung versehene Ende (16) des Ansatzstücks (12).

## Claims

1. A sealed coupling comprising first and second tubular endpieces (10, 12) each having an end (14) provided with an orifice (18, 20), beyond its own end, the first endpiece (10) having a U-shaped axial extension (22) provided with a transverse groove (24) that comprises a semicircular portion (24a) of the radius (R) greater than the radius (r) of the orifice (18) of the first endpiece, together with two rectilinear portions (24b, 24c) situated at opposite ends of said semicircular portion (24a), said groove having a first radial wall (25a) situated adjacent to the end (14) of the first endpiece and a second radial wall (25b) facing the first, the second endpiece (12) being provided with a substantially circular radially outwardly extending flange (26) having a radial face (27) facing away from the end of said second endpiece, said flange being suitable for being engaged in the groove (24) during relative transverse displacement (F) of the two endpieces for the purpose of coupling said endpieces together, the end (16) of one of the endpieces (12) being provided with a circular sealing gasket (28) that projects axially beyond said end and that is suitable for coming into sealing contact with the end of the other endpiece, the coupling being characterised in that the second endpiece (12) has a radial collar (30) that is resiliently flexible in an axial direction and that has a radial face (35) facing away from the end (16) of said second endpiece (12), said radial face being suitable for bearing against the second radial wall (25b) of the groove (24) when the flange (26) is engaged in said groove, and in that one (12) of the two pieces (10, 12) constituted by the first and second endpieces has an axial projection (38) situated in the vicinity of the edge of its orifice (16), while the other (10) of said pieces has an axial setback (40) situated in the vicinity of the edge of its orifice (14) suitable for receiving said axial projection (38) when the endpieces (10, 12) are in the coupled-together position.

2. A coupling according to claim 1, characterised in that the axial projection and setback (38, 40) are frustoconical and complementary in shape.

3. A coupling according to claim 1 or 2, characterised in that the axial length (h2) of the axial projection (38) is greater than the extent (h1) to which the sealing gasket (28) projects axially beyond the end (16) of the endpiece (12) provided with said gasket.
